# EUROPEAN PATENT APPLICATION

(11) **EP 4 815 054 A1**
(43) Date of publication of application: **30.09.2026**
(21) Application number: 24899256.2
(22) Date of filing: 15.07.2024
(51) Int. Cl.: H01M 4/36

(54) **GRAPHITE NEGATIVE ELECTRODE ACTIVE MATERIAL AND PREPARATION METHOD THEREFOR, SECONDARY BATTERY CONTAINING SAME AND ELECTRIC DEVICE**

(30) Priority: 07.12.2023 CN 202311679523
(71) Applicant: Contemporary Amperex Technology Co., Limited, Ningde, Fujian 352100 (CN)
(72) Inventor: WU, Chou, Ningde, Fujian 352100 (CN); MA, Jianjun, Ningde, Fujian 352100 (CN); CHEN, Meiwan, Ningde, Fujian 352100 (CN); HE, Libing, Ningde, Fujian 352100 (CN)
(74) Representative: Kraus & Lederer PartGmbB
(86) International application number: PCT/CN2024/105478
(87) International publication number: WO 2025/118605

(57) **Abstract**

Provided are a graphite negative electrode active material and a preparation method therefor, a secondary battery containing same and an electric device. The powder compaction density of the graphite negative electrode active material under a pressure of 49,000 N is greater than or equal to 1.60 g/cm³, and the ratio Id/Ig of the peak intensity Id at 1250 cm⁻¹ to 1500 cm⁻¹ and the peak intensity Ig at 1500 cm⁻¹ to 1650 cm⁻¹ in the Raman spectrum of the graphite negative electrode active material is greater than or equal to 0.15. The graphite negative electrode active material can take both the energy density and rate capability of a battery into consideration.

## Description

### CROSS-REFERENCE TO RELATED APPLICATIONS

The present disclosure claims priority to Chinese Patent Application No. 202311679523.9, filed on December 07, 2023 and entitled "GRAPHITE NEGATIVE ELECTRODE ACTIVE MATERIAL AND PREPARATION METHOD THEREFOR, SECONDARY BATTERY CONTAINING SAME, AND POWER CONSUMING APPARATUS", which is incorporated herein by reference in its entirety.

### TECHNICAL FIELD

The present disclosure relates to the technical field of secondary batteries, and in particular, to a graphite negative electrode active material and a preparation method therefor, a secondary battery containing the same, and a power consuming apparatus.

### BACKGROUND

With the development of fields such as electric vehicles and large-scale energy storage systems, increasingly high requirements are put on the market for energy density and rate performance of energy storage apparatuses. However, from a technical perspective, it is very difficult to achieve perfect compatibility between the energy density and the rate performance.

### SUMMARY

The present disclosure is disclosed in view of the foregoing issue, and an objective of the present disclosure is to provide a graphite negative electrode active material, where a secondary battery prepared by using the graphite negative electrode active material can take both the energy density and rate performance of the battery into consideration.

A first aspect of the present disclosure provides a graphite negative electrode active material, where a powder compaction density of the graphite negative electrode active material under a pressure of 49000 N is greater than or equal to 1.60 g/cm³; and a ratio Id/Ig of a peak intensity Id at 1250 cm⁻¹ to 1500 cm⁻¹ and a peak intensity Ig at 1500 cm⁻¹ to 1650 cm⁻¹ in a Raman spectrum of the graphite negative electrode active material is greater than or equal to 0.15.

The graphite negative electrode active material has a high powder compaction density under a pressure of 49000 N, and can improve the compaction density of the negative electrode film layer, thereby further improving the energy density of the secondary battery. In addition, Id/Ig of the graphite negative electrode active material indicates a degree of defects on the surface of the material. When Id/Ig is within the foregoing range, the surface of the negative material has a large number of defects, which may promote ion adsorption and binding, improve the transport performance of active ions, and improve the rate performance of the battery.

In conclusion, by controlling the powder compaction density and Id/Ig of the graphite negative electrode active material under a pressure of 49000 N to be in suitable ranges, the secondary battery can take both a high energy density and excellent rate performance into consideration.

In any implementation, the powder compaction density of the graphite negative electrode active material under the pressure of 49000 N ranges from 1.6 g/cm³ to 1.80 g/cm³, and optionally ranges from 1.65 g/cm³ to 1.75 g/cm³.

In any implementation, the ratio Id/Ig of the peak intensity Id at 1250 cm⁻¹ to 1500 cm⁻¹ and the peak intensity Ig at 1500 cm⁻¹ to 1650 cm⁻¹ in the Raman spectrum of the graphite negative electrode active material ranges from 0.2 to 0.35.

In any implementation, based on a total quantity of particles of the graphite negative electrode active material, a quantity proportion of primary particles in the graphite negative electrode active material is greater than or equal to 85%, and optionally ranges from 85% to 100%.

Within this range, the primary particles help to reduce the crushing of the structure of the graphite negative electrode active material caused by the expansion and contraction of the graphite negative electrode active material in a cycle process, improve the structural stability of the graphite negative electrode active material, and further improve the cycle performance of the secondary battery.

In any implementation, a graphitization degree of the graphite negative electrode active material ranges from 85% to 91%.

By controlling the graphitization degree of the graphite negative electrode active material to be within the foregoing range, there are relatively many SP³ bonds in the graphite negative electrode active material, and layers of the graphite negative electrode active material restrain in each other, so that the structure of the graphite negative electrode active material is more stable. The graphite negative electrode active material has excellent stability in a cycle process, facilitating exertion of the cycle performance of the graphite negative electrode active material. In addition, the graphite negative electrode active material has a suitable graphitization degree, the structure of the graphite negative electrode active material is relatively regular, and the material has a high gram capacity, which can improve the energy density of the battery.

In any implementation, a volume distribution particle size Dv50 of the graphite negative electrode active material is less than or equal to 15.0 µm, and optionally ranges from 9.0 µm to 14.0 µm.

The volume distribution particle size Dv50 of the graphite negative electrode active material is within a suitable range, shortening paths for intercalating and de-intercalating active ions, improving the transport performance of the active ions and the electrons, improving the rate performance of the battery, further helping to reduce the specific surface area of the graphite negative electrode active material, and helping to reduce a side reaction between the graphite negative electrode active material and an electrolyte solution and irreversible consumption of the active ions in a cycle process, thereby improving the cycle performance and the storage performance of the secondary battery.

In any implementation, the graphite negative electrode active material includes a kernel and a coating layer covering at least a surface of the kernel, the kernel is artificial graphite, and the coating layer includes amorphous carbon.

The "kernel" of the graphite negative electrode active material is artificial graphite, which reduces a volume change rate in a lithium-ion de-intercalation process, reduces a side reaction generated by crushing and reconstruction of the SEI film in a cycle process, and improves the cycle performance of the battery. In addition, the "shell" is an amorphous carbon, which can effectively reduce diffusion resistance of active ions and particle surface polarization in the material, so that Id/Ig of the material is within a suitable range, which can improve the rate performance of the battery.

In any implementation, the graphite negative electrode active material satisfies at least one of the following conditions:
(1) a tap density of the graphite negative electrode active material ranges from 1.0 g/cm³ to 1.4 g/cm³;
(2) a specific surface area of the graphite negative electrode active material ranges from 0.75 m²/g to 1.75 m²/g;
(3) a particle size distribution (Dv90-Dv10)/Dv50 of the graphite negative electrode active material ranges from 1.30 to 1.80; and
(4) a gram capacity of the graphite negative electrode active material ranges from 325 mAh/g to 340 mAh/g.

By controlling the tap density of the graphite negative electrode active material to be within the foregoing range, inter-particle electronic conduction can be further improved, rate performance of the battery is improved, and stability of the negative electrode slurry is facilitated, so that application of the negative electrode slurry is facilitated, thereby reducing processing difficulty, improving the appearance of the negative electrode plate, and improving the electrical performance of the battery.

The specific surface area of the graphite negative electrode active material is within a suitable range, so that negative impact on the cycle performance caused by a side reaction between the graphite negative electrode active material and an electrolyte solution can be reduced, thereby improving the cycle performance of the battery.

Controlling the volume particle size distribution in the graphite negative electrode active material to be in a suitable range helps the negative electrode film layer to have a suitable porous structure, thereby reducing the difficulty of ion liquid phase transport and improving the rate performance of the secondary battery. In addition, the graphite negative electrode active material may further have good particle packing performance, which helps to improve a compaction density of the negative electrode film layer, thereby further improving an energy density of the secondary battery.

The gram capacity of the graphite negative electrode active material is within this range, the lattice expansion of the material during the cycle process is relatively small, the stability of the crystal structure is good, and the irreversible consumption of the active ions is reduced, thereby improving the cycle performance of the secondary battery.

A second aspect of the present disclosure further provides a preparation method for a graphite negative electrode active material, including the following steps:
providing a raw material;
treating the raw material to obtain a precursor;
performing graphitization treatment on the precursor to obtain a graphitized product; and
performing surface treatment on the graphitized product to obtain a graphite negative electrode active material, where
a powder compaction density of the graphite negative electrode active material under a pressure of 49000 N is greater than or equal to 1.60 g/cm³; and
a ratio Id/Ig of a peak intensity Id at 1250 cm⁻¹ to 1500 cm⁻¹ and a peak intensity Ig at 1500 cm⁻¹ to 1650 cm⁻¹ in a Raman spectrum of the graphite negative electrode active material is greater than or equal to 0.15.

The graphite negative electrode active material prepared by using the method has a high powder compaction density and high Id/Ig, and can take both an energy density and a charging and discharging capability of a battery into consideration. A secondary battery prepared by using the material takes both a high energy density and excellent rate performance into consideration.

In any implementation, performing fusion treatment on the graphitized product to obtain an intermediate product, where a frequency of the fusion treatment ranges from 20 to 40 Hz, and/or a time of the fusion treatment ranges from 5 to 15 min; and
performing carbonization treatment on the intermediate product and pitch after being mixed at a normal temperature to obtain the graphite negative electrode active material.

In the present disclosure, fusion treatment is first performed on the graphitized product, and then pitch coating treatment is performed. The fusion treatment can achieve objectives of spherification and corner removal. In one aspect, the structure of the intermediate product obtained through fusion and spherification is relatively regular, which can improve the powder compaction density of the intermediate product. In the other aspect, the small-particle graphite generated through corner removal can fill the pores of the material of the intermediate product, to further improve the powder compaction density of the intermediate product, to provide a basis for obtaining a graphite negative electrode active material having a high powder compaction density.

In any implementation, a mass ratio of the intermediate product to the pitch ranges from 1:99 to 10:90, and optionally ranges from 2:98 to 5:95.

The mass ratio of the intermediate product to the pitch being within a suitable range can achieve objectives of coating and modification, so that the graphite negative electrode active material has an appropriate thickness of amorphous carbon, and the graphite negative electrode active material has a high Id/Ig value. In addition, excessive negative impact caused to the powder compaction density of the material by excessive amorphous carbon is avoided, so that the material takes both a high energy density and excellent dynamic performance into consideration.

In any implementation, the raw material is a raw material including one or more of petroleum coke, needle coke, and pitch coke, and optionally is petroleum coke.
based on a total volume of structures of the raw material, a volume proportion of a mosaic structure and a regional structure is greater than or equal to 60%, and optionally ranges from 65% to 80%.

The volume proportion of the mosaic structure and the regional structure are controlled to be in a suitable range, and the raw material with good isotropy provides a raw material basis for obtaining a graphite negative electrode active material having a high isotropic degree. In a charging and discharging process of a battery, the graphite negative electrode active material can have active ions intercalated in a plurality of directions, force bearing is more uniform, and expansion is relatively small, which helps improve the cycle life of the battery. In addition, the graphite negative electrode active material having a relatively high isotropic degree has many active ion transport channels and short transport paths, which helps to improve the rate performance.

In any implementation, a maximum power of the graphitization treatment is 70% to 90% of a rated power of a graphitization treatment device.

In any implementation, the maximum power of the graphitization treatment ranges from 21000 W to 26000 W; and/or, a constant power time of the graphitization treatment at the maximum power ranges from 8 h to 40 h.

For a suitable maximum power of the graphitization treatment and/or a constant power time at the maximum power, a powder compaction density and a defect degree of the graphitized product are within suitable ranges, and after the surface treatment is performed on the graphitized product, a graphite negative electrode active material having an excellently high powder compaction density and defect degree can be obtained.

In any implementation, a gram capacity of the graphitized product ranges from 325 mAh/g to 340 mAh/g.

The gram capacity of the graphitized product is within a suitable range, and the powder compaction density and the defect degree of the graphitized product are within suitable ranges. After the surface treatment is performed on the graphitized product, a graphite negative electrode active material having a relatively high powder compaction density and a relatively high defect degree can be obtained.

In any implementation, the treating the raw material specifically includes the following steps:
crushing, reshaping, and classifying the raw material, and removing fine powder obtained after the crushing, to obtain a secondary raw material; and
carbonizing the secondary raw material, to obtain a precursor,
where a volume distribution particle size Dv50 of the secondary raw material ranges from 8.0 to 16.0 µm, and/or a particle size distribution (Dv90-Dv10)/Dv50 of the secondary raw material ranges from 1.30 to 1.70.

Controlling the Dv50 of the secondary raw material to be within a suitable range helps to control Dv50 of the graphite negative electrode active material to be within a suitable range, shorten paths for intercalating and de-intercalating active ions, improve the transport performance of the active ions and the electrons, improve the rate performance of the battery, and helps to reduce a side reaction of the graphite negative electrode active material and irreversible consumption of the active ions in a cycle process, thereby improving the cycle performance and the storage performance of the secondary battery.

Controlling the particle size distribution (Dv90-Dv10)/Dv50 of the secondary raw material to be in a suitable range helps to control the particle size distribution (Dv90-Dv10)/Dv50 of the graphite negative electrode active material to be in a suitable range and helps the negative electrode film layer to have a suitable porous structure, thereby reducing the difficulty of ion liquid phase transport and improving the rate performance of the secondary battery. In addition, the graphite negative electrode active material may further have good particle packing performance, which helps to improve a compaction density of the negative electrode film layer, thereby further improving an energy density of the secondary battery.

A third aspect of the present disclosure provides a secondary battery, including a negative electrode plate, where the negative electrode plate the graphite negative electrode active material according to the first aspect of the present disclosure, or a graphite negative electrode active material prepared by using the preparation method according to the second aspect.

A fourth aspect of the present disclosure provides a power consuming apparatus, including the secondary battery according to the third aspect of the present disclosure.

### BRIEF DESCRIPTION OF THE DRAWINGS

FIG. 1 is a schematic view of a secondary battery according to an embodiment of the present disclosure.
FIG. 2 is an exploded view of the secondary battery according to the embodiment of the present disclosure as shown in FIG. 1.
FIG. 3 is a schematic view of a battery module according to an embodiment of the present disclosure.
FIG. 4 is a schematic view of a battery pack according to an embodiment of the present disclosure.
FIG. 5 is an exploded view of the battery pack according to the embodiment of the present disclosure as shown in FIG. 4.
FIG. 6 is a schematic view of a power consuming apparatus in which a secondary battery serves as a power source according to an embodiment of the present disclosure.

### Description of reference numerals:

1-battery pack; 2-upper box; 3-lower box; 4-battery module; 5-secondary battery; 51-housing; 52-electrode assembly; and 53-cover plate.

### DETAILED DESCRIPTION

Hereinafter, embodiments that specifically disclose a graphite negative electrode active material and a preparation method therefor, a secondary battery containing the same, and a power consuming apparatus of the present disclosure will be described in detail with reference to the drawings as appropriate. However, there may be situations where unnecessary detailed explanations are omitted. For example, there are situations where detailed explanations of well-known matters are omitted and repeated explanations of the same structure are actually provided. Thus, the following description does not become unnecessarily lengthy, which facilitates the easy comprehension of those skilled in the art. In addition, the drawings and subsequent descriptions are provided for those skilled in the art to fully understand the present disclosure and are not intended to limit the subject matter defined in the claims.

The "ranges" disclosed in the present disclosure are defined in the form of lower and upper limits. A given range is defined by selecting a lower limit and an upper limit, and the selected lower and upper limits define the boundaries of the particular range. The range defined in this way may include or exclude end values, and may be arbitrarily combined, that is, any lower limit can be combined with any upper limit to form a range. For example, if ranges of 60-120 and 80-110 are listed for a particular parameter, it is to be understood that ranges of 60-110 and 80-120 are also expected. In addition, if the minimum range values 1 and 2 are listed, and if the maximum range values 3, 4, and 5 are listed, the following ranges can all be expected: 1-3, 1-4, 1-5, 2-3, 2-4, and 2-5. In the present disclosure, unless otherwise specified, the numerical value range "a-b" represents an abbreviated representation of any combination of real numbers between a and b, where a and b are both real numbers. For example, the numerical range "0-5" means that all real numbers between 0-5 are listed herein, and "0-5" is merely an abbreviated representation of the combination of these numbers. In addition, when a parameter is expressed as an integer ≥2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present disclosure may be combined with each other to form new technical solutions.

Unless otherwise specified, all technical features and optional technical features of the present disclosure may be combined with each other to form new technical solutions.

Unless otherwise specified, all the steps in the present disclosure can be carried out, either in order or randomly, preferably in order. For example, the method including steps (a) and (b) indicates that the method may include steps (a) and (b) performed sequentially, or the method may include steps (b) and (a) performed sequentially. For example, reference to "the method may further include step (c)" indicates that step (c) may be added to the method in any order, e.g., the method may include steps (a), (b) and (c), or steps (a), (c) and (b), or steps (c), (a) and (b), or the like.

Unless otherwise specified, the terms such as "include", "include", and their variants mentioned in the present disclosure may be open-ended or closed-ended. For example, "include" and "include" may mean that other components not listed may or may not further be included or included.

Unless otherwise specified, the term "or" is inclusive in the present disclosure. For example, a phrase "A or B" means "A, B, or both A and B" More specifically, any one of the following conditions satisfies the condition "A or B": A is true (or exists) and B is false (or does not exist); A is false (or does not exist) and B is true (or exists); or both A and B are true (or exist).

The graphite negative electrode active material is one of important raw materials of a negative electrode plate, and has a relatively great impact on the electrical performance of the negative electrode plate and the secondary battery. In the existing technology, to improve a rate performance of a graphite negative electrode active material, the graphite negative electrode active material is uniformly mixed with a coating agent (for example, pitch or a high-polymer compound), and then, heat treatment is performed to coat a surface of the graphite negative electrode active material with an amorphous carbon layer. However, after the conventional coating treatment, a powder compaction density of the graphite negative electrode active material is significantly reduced, a compaction density of the negative electrode film layer is affected, and an energy density of a secondary battery is reduced. Therefore, it is difficult to perfectly take both a high energy density and excellent rate performance into consideration in the existing technology.

### [Graphite negative electrode active material]

The present disclosure provides a graphite negative electrode active material, where a powder compaction density of the graphite negative electrode active material under a pressure of 49000 N is greater than or equal to 1.60 g/cm³, and a ratio Id/Ig of a peak intensity Id at 1250 cm⁻¹ to 1500 cm⁻¹ and a peak intensity Ig at 1500 cm⁻¹ to 1650 cm⁻¹ in a Raman spectrum of the graphite negative electrode active material is greater than or equal to 0.15.

In some implementations, a powder compaction density of the graphite negative electrode active material under a pressure of 49000 N is optionally 1.60 g/cm³, 1.61 g/cm³, 1.62 g/cm³, 1.63 g/cm³, 1.64 g/cm³, 1.65 g/cm³, 1.66 g/cm³, 1.67 g/cm³, 1.68 g/cm³, 1.69 g/cm³, 1.70 g/cm³, 1.71 g/cm³, 1.72 g/cm³, 1.73 g/cm³, 1.74 g/cm³, 1.75 g/cm³, 1.76 g/cm³, 1.77 g/cm³, 1.78 g/cm³, 1.79 g/cm³, 1.80 g/cm³, 1.81 g/cm³, 1.82 g/cm³, 1.83 g/cm³, 1.84 g/cm³, or 1.85 g/cm³, or in a range between any two of the foregoing values.

In this specification, the term "powder compaction density" refers to a density of the to-be-tested powder under a preset pressure. A larger powder compaction density indicates a higher mass of the powder material per unit volume. For the graphite negative electrode active material, a higher powder compaction density indicates a higher compaction density of the negative electrode film layer and being more helpful in increasing the energy density of the secondary battery.

The graphite negative electrode active material of the present disclosure has a high powder compaction density, and the negative electrode film layer has a high compaction density, which provides a material basis for preparing a battery with a high energy density.

A method for measuring the powder compaction density may be any method known in the art. For example, referring to GB/T 24533-2009, 1g of graphite negative electrode active material powder is weighed and added into a die having a bottom area of 1.327 cm², is pressurized to a specified pressure, for example, 49000 N and held for 30s, and then is depressurized and held for 10s. The powder compaction density of the graphite negative electrode active material under a selected pressure is measured by using an electronic pressure tester (for example, an electronic pressure tester: model UTM7305).

A ratio Id/Ig of a peak intensity Id at 1250 cm⁻¹ to 1500 cm⁻¹ and a peak intensity Ig at 1500 cm⁻¹ to 1650 cm⁻¹ in a Raman spectrum of the graphite negative electrode active material may represent a ratio of a surface defect to a crystal region of the graphite negative electrode active material. Larger Id/Ig indicates a larger surface defect proportion of the graphite negative electrode active material. A high defect degree can increase a de-intercalation channel of the active ions and improve a de-intercalation speed of the active ions, thereby improving rate performance of the graphite negative electrode active material. A high ratio Id/Ig of the graphite negative electrode active material of the present disclosure and a high surface defect degree of the graphite negative electrode active material can effectively improve rate performance of a battery.

In some implementations, a ratio Id/Ig of a peak intensity Id at 1250 cm⁻¹ to 1500 cm⁻¹ and a peak intensity Ig at 1500 cm⁻¹ to 1650 cm⁻¹ in a Raman spectrum of the graphite negative electrode active material is optionally 0.15, 0.16, 0.17, 0.18, 0.19, 0.20, 0.21, 0.22, 0.23, 0.24, 0.25, 0.30, 0.35, 0.40, 0.45, or 0.50, or in a range between any two of the foregoing values.

A ratio Id/Ig of a peak intensity Id at 1250 cm⁻¹ to 1500 cm⁻¹ and a peak intensity Ig at 1500 cm⁻¹ to 1650 cm⁻¹ in a Raman spectrum of the graphite negative electrode active material may be tested by using any method known in the art, for example, an InVia Qontor (Reflex) laser microscopic Raman spectrometer, where a solid laser having a wavelength of 523nm is used as a light source, 100 points are collected in a 100 µm × 100 µm region, a ratio Id/Ig of a peak intensity Id at 1250 cm⁻¹ to 1500 cm⁻¹ and a peak intensity Ig at 1500 cm⁻¹ to 1650 cm⁻¹ of each point is calculated, and a median of Id/Ig values of the 100 points is used as a ratio Id/Ig of a peak intensity Id at 1250 cm⁻¹ to 1500 cm⁻¹ and a peak intensity Ig at 1500 cm⁻¹ to 1650 cm⁻¹ in a Raman spectrum of the graphite negative electrode active material.

To sum up, in the graphite negative electrode active material of the present disclosure, a high powder compaction density and high Id/Ig are both considered. A secondary battery prepared by using the graphite negative electrode active material can take both the energy density and rate performance into consideration.

In some implementations, the powder compaction density of the graphite negative electrode active material under the pressure of 49000 N ranges from 1.60 g/cm³ to 1.80 g/cm³.

In some implementations, a powder compaction density of the graphite negative electrode active material under a pressure of 49000 N is optionally 1.60 g/cm³, 1.65 g/cm³, 1.66 g/cm³, 1.67 g/cm³, 1.68 g/cm³, 1.69 g/cm³, 1.70 g/cm³, 1.71 g/cm³, 1.72 g/cm³, 1.73 g/cm³, 1.74 g/cm³, 1.75 g/cm³, 1.76 g/cm³, 1.77 g/cm³, 1.78 g/cm³, 1.79 g/cm³, or 1.80 g/cm³, or in a range between any two of the foregoing values.

In some implementations, the powder compaction density of the graphite negative electrode active material under the pressure of 49000 N ranges from 1.65 g/cm³ to 1.75 g/cm³.

In some implementations, a powder compaction density of the graphite negative electrode active material under a pressure of 49000 N is optionally 1.65 g/cm³, 1.66 g/cm³, 1.67 g/cm³, 1.68 g/cm³, 1.69 g/cm³, 1.70 g/cm³, 1.71 g/cm³, 1.72 g/cm³, 1.73 g/cm³, 1.74 g/cm³, or 1.75 g/cm³, or in a range between any two of the foregoing values.

Controlling the powder compaction density of the graphite negative electrode active material under a pressure of 49000 N to be in a suitable range and the negative electrode film layer to have a high compaction density can improve the energy density of the secondary battery, further help the negative electrode film layer to have a suitable porous structure, reduce the difficulty of ion liquid phase transport, improve the ion and electron transport performance, and improve wettability and retentivity of the negative electrode film layer for an electrolyte solution, so that the rate performance and the cycle performance of the secondary battery can be further improved.

In some implementations, the ratio Id/Ig of the peak intensity Id at 1250 cm⁻¹ to 1500 cm⁻¹ and the peak intensity Ig at 1500 cm⁻¹ to 1650 cm⁻¹ in the Raman spectrum of the graphite negative electrode active material ranges from 0.2 to 0.35.

In some implementations, Id/Ig ranges from 0.2 to 0.33. In some implementations, Id/Ig is optionally 0.20, 0.21, 0.22, 0.23, 0.24, 0.25, 0.30, or 0.35, or in a range between any two of the foregoing values.

Excessively large Id/Ig indicates excessive defects on the surface of the graphite, and may affect the thickness of a solid electrode interface (SEI) film formed in an initial cycle process of the secondary battery, cause an irreversible capacity loss, and affect the energy density and the cycle performance of the battery.

When Id/Ig is within the foregoing range, the surface of the negative material has an appropriate number of defects, which can promote ion adsorption and binding, and reduce the irreversible capacity loss caused by a high degree of defects, so that the negative electrode film layer is highly compacted, and the cycle performance of the battery can be further improved.

In some implementations, based on a total quantity of particles of the graphite negative electrode active material, a quantity proportion of primary particles is greater than or equal to 85%.

In some implementations, based on a total quantity of particles of the graphite negative electrode active material, a quantity proportion of primary particles ranges from 85% to 100%. In some implementations, based on a total quantity of the primary particles and secondary particles, a quantity proportion of primary particles is optionally 85%, 86%, 87%, 88%, 89%, 90%, 91%, 92%, 93%, 94%, 95%, 96%, 97%, 98%, 99%, or 100%, or in a range between any two of the foregoing values.

In this specification, the "primary particle" is also referred to as a single particle, and generally refers to a non-aggregated particle. The primary particle may be confirmed by using a scanning electron microscope (SEM) image.

The quantity proportion of primary particles may be measured in the art by using an instrument and a method known in the art. An example is as follows: the graphite negative electrode active material may be laid on and attached to a conductive adhesive, to form a to-be-tested sample whose length×width is 6cm×1.1cm. Morphology of particles in the to-be-tested sample is tested by using a scanning electron microscope and a spectrometer (for example, ZEISS SEM(sigma300)). For the test, reference may be made to JY/T010-1996. To ensure accuracy of a test result, a plurality (for example, 10 or 20) of different regions may be randomly selected from the to-be-tested sample to perform a scanning test, and at a magnification (for example, 500 or 1000), statistics on quantities of primary particles and total quantities of particles in the test regions are collected. A ratio of the quantity of primary particles to the total quantity of particles in any test region is a quantity proportion of primary particles in the region, and an average value of test results of 10 test regions is used as a quantity proportion of primary particles. To ensure accuracy of the result, a plurality of to-be-tested samples (for example, 5 or 10) may also be prepared to repeat the foregoing test, and an average value of test results of the to-be-tested samples is used as a quantity proportion of primary particles.

In a cycle process, there is a deformation process of repeated expansion and contraction of the graphite negative electrode active material, which causes the particles of the graphite negative electrode active material to crush, and reduces the mechanical integrity of the particles of the graphite negative electrode active material. In addition, the crushed particles increase the degrees of the infiltration of the electrolyte solution and the side reaction, improve the irreversible consumption of the active ions, and negatively affect the cycle performance of the battery. The primary particle has excellent structural stability, which helps to reduce the crushing of the particles of the graphite negative electrode active material caused by the expansion and contraction of the graphite negative electrode active material in a cycle process, improves the chemical and mechanical stability of the graphite negative electrode active material, reduces irreversible consumption of active ions, and improves the cycle performance of the secondary battery.

In some implementations, a graphitization degree of the graphite negative electrode active material ranges from 85% to 91%. In some implementations, the graphitization degree of the graphite negative electrode active material is optionally 85%, 86%, 87%, 88%, 89%, 90%, or 91%, or in a range between any two of the foregoing values.

In the present disclosure, the graphitization degree of the graphite negative electrode active material may be tested by using an instrument and a method that are known in the art. For example, an X-ray diffractometer (such as Bruker D8 Discover) may be used for a test. For the test, refer to JISK 0131-1996 and JB/T 4220-2011, to obtain an average layer distance d002 of a C (002) crystal face in a crystal structure of the material. Then, the graphitization degree is calculated according to a formula g=(0.344-d002)/(0.344-0.3354)×100%. In the foregoing formula, d002 is an average layer distance, which is expressed in nanometer (nm), of the C (002) crystal face in the crystal structure of the material.

The graphitization degree reflects the integrity of the graphite crystal structure in the material, that is, the regularity of the arrangement of carbon atoms in the graphite structure in the material. A higher graphitization degree of a material indicates a smaller distance between graphite layers, smaller lattice rotation, less scattered packing of layers, a more orderly arrangement, and a higher gram capacity of the material. The graphitization degree of the material is low, indicating a large graphite distance, which facilitates rapid de-intercalation of active ions and improvement in the rate performance of the battery. In addition, the graphite distance is large, and expansion of the material during lithium intercalation is small, which has an effect of shallow charge and shallow discharge. In addition, the graphitization degree of the material is low, there are relatively many SP³ bonds in the graphite negative electrode active material, and layers of the graphite negative electrode active material restrain in each other, so that the structure of the graphite negative electrode active material is more stable. The graphite negative electrode active material has excellent stability in a cycle process, facilitating a long cycle.

By controlling the graphitization degree of the graphite negative electrode active material to be in the foregoing range, the cyclic stability, the gram capacity, and the transport performance of the active ions of the material can be taken into consideration, which helps to obtain a battery having a high energy density, a long cycle, and a high rate performance.

In some implementations, a volume distribution particle size Dv50 of the graphite negative electrode active material is less than or equal to 15.0 µm.

In some implementations, a volume distribution particle size Dv50 of the graphite negative electrode active material is optionally less than or equal to 15.0 µm, less than or equal to 14.0 µm, less than or equal to 13.0 µm, less than or equal to 12.0 µm, less than or equal to 11.0 µm, less than or equal to 10.0 µm, or less than or equal to 9.0 µm.

In the present disclosure, the volume distribution particle size Dv50 of the carbon-based negative electrode material indicates the corresponding particle size at which the cumulative volume distribution percentage of the material reaches 50%, which can be measured by instruments and methods known in the art. For example, measurement can be made by using a laser particle size analyzer with reference to GB/T 19077-2016. The test instrument can be Model Mastersizer 3000 laser particle size analyzer of Malvern Instruments Inc., United Kingdom.

The graphite negative electrode active material has a small volume distribution particle size Dv50, and active ion intercalation and de-intercalation paths are relatively short, which can improve the transport performance of the active ions and electrons, and improve the rate performance of the material.

In some implementations, a volume distribution particle size Dv50 of the graphite negative electrode active material ranges from 9.0 µm to 14.0 µm.

In some implementations, a volume distribution particle size Dv50 of the graphite negative electrode active material is optionally 9.0 µm, 9.5 µm, 10.0 µm, 10.5 µm, 11.0 µm, 11.5 µm, 12.0 µm, 12.5 µm, 13.0 µm, 13.5 µm, or 14.0 µm, or in a range between any two of the foregoing values.

The volume distribution particle size Dv50 of the graphite negative electrode active material is within a suitable range, shortening paths for intercalating and de-intercalating active ions, improving the transport performance of the active ions and the electrons, improving the rate performance of the battery, further helping to reduce the specific surface area of the graphite negative electrode active material, and helping to reduce a side reaction of the graphite negative electrode active material and irreversible consumption of the active ions in a cycle process, thereby improving the cycle performance and the storage performance of the secondary battery.

In some implementations, the graphite negative electrode active material includes a kernel and a coating layer covering at least a surface of the kernel, the kernel is artificial graphite, and the coating layer includes amorphous carbon.

In this specification, the term "artificial graphite" refers to a carbon material obtained by high-temperature graphitization treatment.

In this specification, the term "amorphous carbon" refers to a carbon material having a relatively low degree of graphitization and a disordered and irregular microscopic structure.

The "kernel" of the graphite negative electrode active material is artificial graphite, which reduces a volume change rate in a lithium-ion de-intercalation process, reduces a side reaction generated by crushing and reconstruction of the SEI film in a cycle process, and improves the cycle performance of the battery. In addition, the "shell" is an amorphous carbon, which can effectively reduce diffusion resistance of active ions and particle surface polarization in the material, so that Id/Ig of the material is within a suitable range, which can improve the rate performance of the battery.

In some implementations, a tap density of the graphite negative electrode active material ranges from 1.0 g/cm³ to 1.4 g/cm³. In some implementations, a tap density of the graphite negative electrode active material is optionally 1.0 g/cm³, 1.05 g/cm³, 1.1 g/cm³, 1.15 g/cm³, 1.20 g/cm³, 1.25 g/cm³, 1.3 g/cm³, or 1.4 g/cm³, or in a range between any two of the foregoing values.

In this specification, the term "tap density" refers to a density of a powder material after being vibrated and compressed under a specific condition.

The tap density of the graphite negative electrode active material may be tested by using an instrument and a method that are known in the art. For example, measurement can be made by using a powder tap density tester with reference to GB/T 5162-2006. The test instrument may be Dandong Bettersize BT-301. The test parameters are as follows: vibration frequency 250 ± 15 times/minute, amplitude 3 ± 0.2 mm, vibration count 5000, and graduated cylinder 25 mL.

By controlling the tap density of the graphite negative electrode active material to be within the foregoing range, inter-particle electronic conduction can be further improved, rate performance of the battery is improved, and stability of the negative electrode slurry is facilitated, so that application of the negative electrode slurry is facilitated, thereby reducing processing difficulty, improving the appearance of the negative electrode plate, and improving the electrical performance of the battery.

In some implementations, a specific surface area of the graphite negative electrode active material ranges from 0.75 m²/g to 1.75 m²/g. In some implementations, a specific surface area of the graphite negative electrode active material is optionally 0.75 m²/g, 0.85 m²/g, 0.95 m²/g, 1.05 m²/g, 1.15 m²/g, 1.25 m²/g, 1.35 m²/g, 1.45 m²/g, 1.55 m²/g, 1.65 m²/g, or 1.75 m²/g, or in a range between any two of the foregoing values.

The specific surface area of the graphite negative electrode active material may be tested by using an instrument and a method that are known in the art. For example, with reference to GB/T 19587-2017, a nitrogen adsorption specific surface area analysis test method may be used for testing, and a BET (Brunauer Emmett Teller) method is used for calculation, where the nitrogen adsorption specific surface area analysis test can be implemented with a Tri-Star 3020 type specific surface area analysis tester available from Micromeritics company, the United States.

The specific surface area of the graphite negative electrode active material is within a suitable range, and the material has an appropriate adsorption site, which can promote adsorption of active ions and improve the rate performance of the secondary battery. In addition, a case that excessive side reactions between the graphite negative electrode active material and an electrolyte solution negatively affect the cycle performance can be avoided, and the cycle performance and the rate performance of the battery are both considered.

In some implementations, a volume particle size distribution (Dv90-Dv10)/Dv50 of the graphite negative electrode active material ranges from 1.30 to 1.80. In some implementations, a volume particle size distribution (Dv90-Dv10)/Dv50 of the graphite negative electrode active material is optionally 1.30, 1.35, 1.40, 1.45, 1.50, 1.60, 1.70, or 1.80, or in a range between any two of the foregoing values.

The volume distribution particle sizes Dv10, Dv50, and Dv90 of the graphite negative electrode active material respectively indicate the corresponding particle sizes at which the cumulative volume distribution percentage of the material reaches 10%, 50%, and 90%, which can be determined by instruments and methods known in the art. For example, with reference to the GB/T 19077-2016 particle size distribution laser diffraction method, a Malvern laser particle size analyzer is used for a representation test, for example, a Malvern instrument such as Mastersizer-3000 is used for the test.

Controlling the volume particle size distribution in the graphite negative electrode active material to be in a suitable range helps the negative electrode film layer to have a suitable porous structure, thereby reducing the difficulty of ion liquid phase transport and improving the rate performance of the secondary battery. In addition, the graphite negative electrode active material may further have good particle packing performance, which helps to improve a compaction density of the negative electrode film layer, thereby further improving an energy density of the secondary battery.

In some implementations, a gram capacity of the graphite negative electrode active material ranges from 325 mAh/g to 340 mAh/g.

In this specification, the term "gram capacity" refers to a ratio of an electrical capacity that can be released by the graphite negative electrode active material to a mass of the graphite negative electrode active material. Generally, a higher gram capacity indicates being more helpful in improving the energy density of the secondary battery.

In some implementations, a gram capacity of the graphite negative electrode active material is 325 mAh/g, 328 mAh/g, 329 mAh/g, 330 mAh/g, 331 mAh/g, 332 mAh/g, 333 mAh/g, 334 mAh/g, 335 mAh/g, 336 mAh/g, 337 mAh/g, or 340 mAh/g, or in a range between any two of the foregoing values.

The measurement method for the gram capacity may be any method known in the art. For example, a sample of the graphite negative electrode active material, a conductive agent: carbon black, and polyvinylidene fluoride (PVDF) may be thoroughly stirred and mixed in an appropriate amount of solvent NMP according to a mass ratio of 91.6:1.8:6.6, to form a uniform negative electrode slurry. The negative electrode slurry was uniformly applied to a surface of a copper foil, which acted as a negative electrode current collector, followed by drying and cold pressing. Then, a lithium metal sheet is used as a counter electrode, a polypropylene (PP) film is used as a separator, and an electrolyte solution is injected. A formula of the used electrolyte solution is as follows: Dimethyl carbonate (DMC), ethyl methyl carbonate (EMC), and ethylene carbonate (EC) were mixed at a weight ratio of 1:1:1 to obtain an organic solvent, and then LiPF6 was dissolved in the organic solvent to prepare an electrolyte solution with a concentration of 1.0 mol/L. In an argon-protected glove box, a CR2430 button battery was assembled. At 25°C, the foregoing prepared button battery is first discharged at a constant current of 0.05 C to 0.005 V, then discharged at a constant current of 10 µA to 0.005 V, and allowed to stand for 5 min, and the first-circle discharging capacity of the button battery is recorded. Then, the battery is charged to 2.0 V at a constant current of 0.1 C, and the charging capacity of the button-type battery is recorded. A ratio of the charging capacity of the button battery to the mass of the sample of the graphite negative electrode active material is a gram capacity of the graphite negative electrode active material.

The gram capacity of the graphite negative electrode active material is within this range, the lattice expansion of the material during the cycle process is relatively small, the stability of the crystal structure is good, and the irreversible consumption of the active ions is reduced, thereby improving the cycle performance of the battery. In addition, the graphite negative electrode active material has excellent electrical capacity, and can improve the energy density of the secondary battery.

### [Preparation method for a graphite negative electrode active material]

The present disclosure further provides a preparation method for a graphite negative electrode active material, including the following steps:
providing a raw material;
treating the raw material to obtain a precursor;
performing graphitization treatment on the precursor to obtain a graphitized product; and
performing surface treatment on the graphitized product to obtain a graphite negative electrode active material, where
a powder compaction density of the graphite negative electrode active material under a pressure of 49000 N is greater than or equal to 1.60 g/cm³; and
a ratio Id/Ig of a peak intensity Id at 1250 cm⁻¹ to 1500 cm⁻¹ and a peak intensity Ig at 1500 cm⁻¹ to 1650 cm⁻¹ in a Raman spectrum of the graphite negative electrode active material is greater than or equal to 0.15.

The graphite negative electrode active material prepared by using the method has a high energy density and an excellent charging and discharging capability. A secondary battery prepared by using the material takes both a high energy density and excellent rate performance into consideration.

In some implementations, the surface treatment is performing fusion treatment on the graphitized product to obtain an intermediate product, where a frequency of the fusion treatment ranges from 20 to 40 Hz, and/or a time of the fusion treatment ranges from 5 to 15 min; and
performing carbonization treatment on the intermediate product and pitch after being mixed at a normal temperature to obtain the graphite negative electrode active material.

In the existing technology, coating treatment is performed on a graphitized product directly by using pitch to improve a defect degree on a surface of a graphite negative electrode active material, thereby improving a rate performance of the material. However, after the coating treatment is performed on the graphitized product directly, the powder compaction density of the material may be severely affected, and the compaction density of the negative electrode film layer is reduced, thereby affecting the energy density of the secondary battery.

In the present disclosure, fusion treatment is performed on the graphitized product under a specific process condition before pitch coating treatment, so as to achieve objectives of spherification and corner removal. In one aspect, the structure of the intermediate product obtained through fusion and spherification is relatively regular, which can improve the powder compaction density of the intermediate product. In the other aspect, the small-particle graphite generated through corner removal can fill the pores of the material of the intermediate product, to further improve the powder compaction density of the intermediate product. The fusion treatment can effectively make up for a negative effect of the pitch coating treatment on the powder compaction density of the material, help to obtain a negative electrode film layer having a high compaction density, and help to obtain a graphite negative electrode active material having a high energy density and excellent rate performance.

In some implementations, a frequency of fusion treatment is optionally 20 Hz, 25 Hz, 30 Hz, 35 Hz, or 40 Hz, or in a range between any two of the foregoing values.

The frequency of the fusion treatment affects the powder compaction density and the specific surface area of the graphite negative electrode active material. A high frequency of the fusion treatment can improve the powder compaction density of the graphite negative electrode active material, and also avoid damage to a treatment device due to an excessively high frequency of the fusion treatment.

In some implementations, a time of the fusion treatment ranges from 5 to 15 min. In some implementations, a time of fusion treatment is optionally 5 min, 6 min, 7 min, 8 min, 9 min, 10 min, 11 min, 12 min, 13 min, 14 min, or 15 min, or in a range between any two of the foregoing values.

The time of the fusion treatment affects the powder compaction density, the specific surface area, and the Id/Ig of the graphite negative electrode active material. A long fusion treatment time can improve the powder compaction density and Id/Ig of the graphite negative electrode active material, to obtain the negative electrode film layer having a high compaction density, thereby improving the energy density of the battery.

In some implementations, a treatment temperature of the carbonization treatment ranges from 950 °C to 1350 °C.

In some implementations, a treatment temperature of the carbonization treatment is optionally 950°C, 1000°C, 1100°C, 1200°C, 1300°C, or 1350°C, or in a range between any two of the foregoing values.

A treatment temperature of the carbonization treatment affects Id/Ig of the graphite negative electrode active material. If the treatment temperature of the carbonization treatment is excessively high, the pitch coating degree is high, the integrity of the coating layer of the graphite negative electrode active material is high, and the Id/Ig of the graphite negative electrode active material is reduced, which is adverse to improving the rate performance of the battery. If the treatment temperature of the carbonization treatment is excessively low, the functional group on the surface of the pitch may not be completely removed, causing a side reaction in a cycle process and affecting the cycle performance of the battery.

In some implementations, the raw material is a raw material including one or more of petroleum coke, needle coke, and pitch coke.

In this specification, the term "petroleum coke" refers to coke formed after high-temperature carbonization is performed on petroleum residue or petroleum pitch.

In this specification, the term "needle coke" refers to needle-textured coke that can be generated after coal tar pitch or petroleum pitch is subject to liquid-phase carbonization to generate an anisotropic intermediate phase, and then the anisotropic intermediate phase is subject to processes such as high-temperature carbonization.

In this specification, the term "pitch coke" refers to a solid material generated after coal tar pitch is subject to high-temperature carbonization.

In some implementations, the raw material includes petroleum coke.

The petroleum coke has excellent anisotropy, which helps to prepare a graphite negative electrode active material with a low graphite degree and low expansion, and is beneficial to a long cycle life of the battery. In addition, petroleum coke has a wider source, which is beneficial to industrial production.

The foregoing raw material usually includes at least one of a mosaic structure, a regional structure, and a fibrous structure. Usually, according to morphological features and sizes of isochromatic zones of the coke material under a polarization microscope, a microscopic structure of the isochromatic zone whose size is less than 30 µm is determined as a mosaic structure, a microscopic structure of the isochromatic zone whose size is greater than 30 µm is determined as a regional structure, and an anisotropic banded isochromatic zone is determined as a fibrous structure.

In some implementations of the present disclosure, based on a total volume of structures of the raw material, a volume proportion of a mosaic structure and a regional structure in the raw material is greater than or equal to 60%, and optionally ranges from 65% to 80%.

In some implementations, based on a total volume of structures of the raw material, a volume proportion of a mosaic structure and a regional structure is optionally 60%, 65%, 70%, 75%, 80%, 85%, or 90%, or in a range between any two of the foregoing values.

In the present disclosure, the volume proportions of the mosaic structure and the regional structure in the raw material may be tested by using a method known in the art. As an example, the raw material is taken according to GB 1997-89, the raw material crushed to 1mm is uniformly mixed, shrunk to obtain 40g to 50g, and a sample of 4g to 5g at a level of 0.07mm to 1.0mm is sifted by using a square hole for sheet making. Powder coke and nut coke light sheets are prepared according to the stipulation of MT 116.1-86, the diameter of the powder coke light sheet should not be less than 22 mm, and the volume occupied by a cement should be less than 1/3. The sample is placed on a slide with mastic cement, flattened, and then placed on a stage for focusing. After the microscope is corrected, the polarizer and the analyzer are adjusted to be orthogonal to each other. An azurite plate (1λ) is inserted, so that a visual field presents an interference color of first-order red. The movement rule step length is determined to ensure that more than 400 valid test points are evenly distributed. Advisably, a point distance ranges from 0.3 to 0.5mm, and a row distance usually ranges from 0.5 to 0.8mm. Starting from one end of the sample, a microscopic structure type of a reticle intersection point is determined, and the quantity of valid test points of an optical texture of the mosaic and regional structures divided by the total quantity of counted test points is used as a volume proportion of the mosaic and regional structures in the raw material.

The raw material having many mosaic structures and regional structures has excellent isotropy and anisotropy, which helps to reduce the graphitization degree of the graphite negative electrode active material, so that the graphite negative electrode active material expands relatively little in a cycle process, which helps to improve the cycle stability of the material.

In some implementations, based on a total volume of structures of the raw material, a volume proportion of a mosaic structure and a regional structure is optionally 65%, 70%, 75%, or 80%, or in a range between any two of the foregoing values.

An excessively high volume proportion of the mosaic structure and the regional structure lowers the powder compaction density of the graphite negative electrode active material and the gram capacity of the graphite negative electrode active material, and affects the energy density of the battery. Controlling the volume proportion of the mosaic structure and the regional structure may take both the energy density and the cycle performance of the battery into consideration.

In some implementations, a maximum power of the graphitization treatment is 70% to 90% of a rated power of a graphitization treatment device.

In some implementations, a maximum power of the graphitization treatment is optionally 70%, 75%, 80%, 85%, or 90% of a rated power of a graphitization treatment device, or in a value range between any two thereof. It may be understood that the graphitization treatment device refers to any apparatus capable of performing graphitization treatment, and includes, but is not limited to, apparatuses such as an Acheson furnace, a box furnace, a lengthwise graphitization furnace, continuous graphitization, an electric calcining furnace, an intermediate frequency furnace, and a tube furnace. Rated powers of graphitization treatment devices produced by different manufacturers may be different and may be selected according to an actual situation.

In some implementations, the graphitization treatment device is a lengthwise graphitization furnace, and a rated power of the lengthwise graphitization furnace ranges from 25000 W to 32000 W.

In some implementations, the graphitization treatment device is an Acheson furnace, and a rated power of the Acheson furnace ranges from 28000 W to 30000 W.

The maximum power of the graphitization treatment used in the present disclosure needs to be lower than the rated power of the graphitization treatment device, so as to achieve temperature field uniformity in the graphitization treatment process. Ensuring consistency of gram capacities of materials helps to improve the cycle life of the battery.

In some implementations, the maximum power of the graphitization treatment ranges from 21000 W to 26000 W. In some implementations, the maximum power of the graphitization treatment is optionally 21000 W, 23000 W, 23500 W, 24000 W, or 26000 W, or in a value range between any two thereof.

In some implementations, a constant power time of the graphitization treatment at the maximum power ranges from 8 h to 40 h.

In some implementations, a constant power time of the graphitization treatment at the maximum power is 8 h, 13 h, 16 h, 19 h, 22 h, 25 h, 28 h, 31 h, 33 h, 36 h, 39 h, or 40 h, or in a value range between any two thereof.

In some implementations, the graphitization treatment device is a lengthwise graphitization furnace, and a constant power time of the graphitization treatment at the maximum power ranges from 8 h to 20 h, and optionally ranges from 9 h to 16 h. For example, a constant power time of the graphitization treatment at the maximum power may be 8 h, 15 h, or 20 h, or in a value range between any two thereof.

In some implementations, the graphitization treatment device is an Acheson furnace, and a constant power time of the graphitization treatment at the maximum power ranges from 20 h to 40 h. For example, a constant power time of the graphitization treatment at the maximum power may be 20 h, 30 h, 35 h, or 40 h, or in a value range between any two thereof.

For a suitable maximum power of the graphitization treatment and/or a constant power time at the maximum power, a powder compaction density and a defect degree of the graphitized product are within suitable ranges, and after the surface treatment is performed on the graphitized product, a graphite negative electrode active material having an excellent powder compaction density and defect degree can be obtained.

In some implementations, a gram capacity of the graphitized product ranges from 325 mAh/g to 340 mAh/g. In some implementations, the gram capacity of the graphitized product is optionally 325 mAh/g, 330 mAh/g, 335 mAh/g, or 340 mAh/g, or in a range between any two of the foregoing values.

The gram capacity of the graphitized product is within a suitable range, and the compaction density and the defect degree of the graphitized product are within suitable ranges. After the surface treatment is performed on the graphitized product, a graphite negative electrode active material having an excellent powder compaction density and defect degree can be obtained.

In some implementations, the treating the raw material specifically includes the following steps:
crushing, reshaping, and classifying the raw material, and removing fine powder obtained after the crushing, to obtain a secondary raw material; and
carbonizing the secondary raw material, to obtain a precursor,
where a volume distribution particle size Dv50 of the secondary raw material ranges from 8.0 to 16.0 µm, and/or a particle size distribution (Dv90-Dv10)/Dv50 of the secondary raw material ranges from 1.30 to 1.70.

In some embodiments, in the step of performing the crushing treatment on the raw material, a crusher, such as a jaw crusher, may be used to perform the crushing treatment on the coke raw material. For example, the raw material may be first crushed to a set particle size and then is subject to sieving treatment.

In some embodiments, in the step of performing the shaping treatment on the raw material, a shaper may be used to perform the shaping treatment on the crushed raw material. The finishing treatment can reduce burr on a surface of the crushed raw material.

In some embodiments, in the step of classifying the raw material, an air classifier may be used to classify the shaped raw material. Optionally, the air induction frequency may be greater than or equal to 20 Hz, and the classifying frequency may be greater than or equal to 65 Hz. The classifying treatment can reduce the content of large particles and fine powder in the obtained precursor.

In some implementations, a volume distribution particle size Dv50 of the secondary raw material is optionally 8.0 µm, 9.0 µm, 10.0 µm, 11.0 µm, 12.0 µm, 13.0 µm, 14.0 µm, 15.0 µm, or 16.0 µm, or in a range between any two of the foregoing values.

Controlling the Dv50 of the secondary raw material to be within a suitable range helps to control Dv50 of the graphite negative electrode active material to be within a suitable range, shorten paths for intercalating and de-intercalating active ions, improve the transport performance of the active ions and the electrons, improve the rate performance of the battery, and helps to reduce a side reaction of the graphite negative electrode active material and irreversible consumption of the active ions in a cycle process, thereby improving the cycle performance and the storage performance of the secondary battery.

In some implementations, a particle size distribution (Dv90-Dv10)/Dv50 of the secondary raw material is optionally 1.30, 1.40, 1.50, 1.60, or 1.70, or in a range between any two of the foregoing values.

Controlling the particle size distribution (Dv90-Dv10)/Dv50 of the secondary raw material to be in a suitable range helps to control the particle size distribution (Dv90-Dv10)/Dv50 of the graphite negative electrode active material to be in a suitable range and helps the negative electrode film layer to have a suitable porous structure, thereby reducing the difficulty of ion liquid phase transport and improving the rate performance of the secondary battery. In addition, the graphite negative electrode active material may further have good particle packing performance, which helps to improve a compaction density of the negative electrode film layer, thereby further improving an energy density of the secondary battery.

In addition, a secondary battery, a battery module, a battery pack and a power consuming apparatus in the present disclosure are described below with appropriate reference to the accompanying drawings.

An embodiment of the present disclosure provides a secondary battery.

Generally, the secondary battery includes a positive electrode plate, a negative electrode plate, an electrolyte, and a separator. During the charging and discharging process of the battery, active ions are intercalated and de-intercalated back and forth between the positive electrode plate and the negative electrode plate. An electrolyte achieves an ion conducting effect between the positive electrode plate and the negative electrode plate. The separator is disposed between the positive electrode plate and the negative electrode plate to mainly play a role in preventing a short circuit between a positive electrode and a negative electrode while allowing ions to pass through.

### [Positive electrode plate]

The positive electrode plate includes a positive electrode current collector and a positive electrode film layer arranged on at least one surface of the positive electrode current collector, and the positive electrode film layer includes the positive electrode active material of the first aspect of the present disclosure.

In an example, the positive electrode current collector has two opposite surfaces in a thickness direction of the positive electrode current collector, and the positive electrode film layer is disposed on either or both of the two opposite surfaces of the positive electrode current collector.

In some implementations, the positive electrode current collector may be a metal foil or a composite current collector. For example, as the metal foil, an aluminum foil may be used. The composite current collector may include a polymer material base layer or a metal layer located on at least one surface of the polymer material base layer. The composite current collector may be formed by forming a metal material (aluminum, an aluminum alloy, nickel, a nickel alloy, titanium, a titanium alloy, silver, a silver alloy, or the like) on the polymer material substrate (for example, a substrate of polypropylene (PP), polyethylene terephthalate (PET), polybutylene terephthalate (PBT), polystyrene (PS), or polyethylene (PE)).

In some implementations, the positive electrode active material may be a positive electrode active material used for a battery and well known in the art. For example, the positive electrode active material may include at least one of the following materials: a lithium-containing phosphate with an olivine structure, a lithium transition metal oxide, and respective modified compounds thereof. However, the present disclosure is not limited to these materials. Other traditional materials that can be used as positive electrode active materials for batteries may alternatively be used. These positive electrode active materials may be used alone or in combination of two or more. An example of the lithium transition metal oxide may include, but is not limited to, at least one of a lithium cobalt oxide (for example, LiCoO₂), a lithium nickel oxide (for example, LiNiO₂), a lithium manganese oxide (for example, LiMnO₂ or LiMn₂O₄), a lithium nickel cobalt oxide, a lithium manganese cobalt oxide, a lithium nickel manganese oxide, a lithium nickel cobalt manganese oxide (for example, LiNi_{1/3}Co_{1/3}Mn_{1/3}O₂ (which may also be referred to as NCM₃₃₃ for short)), LiNi_{0.5}Co_{0.2}Mn_{0.3}O₂ (which may also be referred to as NCM₅₂₃ for short), LiNi_{0.5}Co_{0.25}Mn_{0.25}O₂ (which may also be referred to as NCM₂₁₁ for short), LiNi_{0.6}Co_{0.2}Mn_{0.2}O₂ (which may also be referred to as NCM₆₂₂ for short), LiNi_{0.8}Co_{0.1}Mn_{0.1}O₂ (which may also be referred to as NCM₈₁₁ for short), a lithium nickel cobalt aluminum oxide (for example, LiNi_{0.85}Co_{0.15}Al_{0.05}O₂), and modified compounds thereof. Examples of the lithium-containing phosphate of the olivine structure may include, but are not limited to, at least one of lithium iron phosphate (e.g., LiFePO₄ (or briefly referred to as LFP)), a composite material of lithium iron phosphate and carbon, lithium manganese phosphate (e.g., LiMnPO₄), a composite material of lithium manganese phosphate and carbon, lithium iron manganese phosphate, and a composite material of lithium manganese iron phosphate and carbon.

In some implementations, the positive electrode film layer optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some implementations, the positive electrode film layer optionally includes a conductive agent. As an example, the conductive agent may include at least one of superconducting carbon, acetylene black, carbon black, Ketjen black, carbon dots, carbon nanotubes, graphene, and carbon nanofibers.

In some implementations, the positive electrode plate may be prepared as follows: dispersing the above components for preparing the positive electrode plate, for example, the positive electrode active material, the conductive agent, the binder, and any other components, in a solvent (for example N-methylpyrrolidone) to form a positive electrode slurry; and coating the positive electrode slurry onto a positive electrode current collector, followed by processes such as drying and cold pressing, to obtain the positive electrode plate.

### [Negative electrode plate]

The negative electrode plate includes a negative electrode current collector and a negative electrode film layer arranged on at least one surface of the negative electrode current collector, and the negative electrode film layer includes a graphite negative electrode active material in any embodiment.

In an example, the negative electrode current collector has two opposite surfaces in a thickness direction of the negative electrode current collector, and the negative electrode film layer is disposed on either or both of the two opposite surfaces of the negative electrode current collector.

In some embodiments, the negative electrode film layer may further include another negative electrode active material other than the foregoing graphite negative electrode active material. In some embodiments, the another negative electrode active material includes, but is not limited to, one or more of conventional natural graphite, other artificial graphite, soft carbon, hard carbon, a silicon-based material, a tin-based material, and lithium titanate. The silicon-based material may include one or more of elemental silicon, silicon oxide, a silicon-carbon composite, a silicon-nitrogen composite, and a silicon alloy material. The tin-based material may include one or more of elemental tin, tin oxide, or a tin alloy material.

In some implementations, the negative electrode current collector may be a metal foil or a composite current collector. For example, as the metal foil, a copper foil may be used. The composite current collector may include a polymer material undercoating and a metal layer formed on at least one surface of a polymer material substrate. The composite current collector may be formed by forming a metal material (copper, copper alloy, nickel, nickel alloy, titanium, titanium alloy, silver, silver alloy, or the like) on the polymer material substrate (for example, a substrate of polypropylene(PP), polyethylene terephthalate (PET), polybutylene terephthalate (PBT), polystyrene (PS), or polyethylene (PE)).

In some implementations, the negative electrode film layer optionally includes a binder. The binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some implementations, the negative electrode film layer optionally includes a conductive agent. The conductive agent may be selected from at least one of superconducting carbon, acetylene black, carbon black, Ketjen black, carbon dots, carbon nanotubes, graphene, and carbon nanofibers.

In some implementations, the negative electrode film layer optionally includes another adjuvant such as a thickener (for example, sodium carboxymethyl cellulose (CMC-Na)).

In some implementations, the negative electrode plate may be prepared in the following manner: dispersing the foregoing components for preparing the negative electrode plate, for example, the graphite negative electrode active material, the conductive agent, the binder, and any other components, in a solvent (for example deionized water) to form a negative electrode slurry; and coating the negative electrode slurry on the negative electrode current collector, followed by processes such as drying and cold pressing, to obtain the negative electrode plate.

### [Electrolyte]

An electrolyte achieves an ion conducting effect between the positive electrode plate and the negative electrode plate. The type of the electrolyte is not specifically limited in the present disclosure and can be selected according to requirements. For example, the electrolyte can be liquid, gelled, or all solid.

In some implementations, the electrolyte is an electrolyte solution. The electrolyte solution includes an electrolyte salt and a solvent.

In some implementations, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium triflate, lithium difluorophosphate, lithium difluoro(oxalato)borate, lithium bis(oxalate)borate, lithium difluorobis(oxalato)phosphate, and lithium tetrafluoro(oxalato)phosphate.

In some implementations, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfoxide, and diethyl sulfone.

In some implementations, the electrolyte solution may optionally include additives. For example, the additive may include a negative electrode film forming additive, a positive electrode film forming additive, and may further include an additive that can improve particular battery performance, for example, an additive that improves battery overcharging performance, or an additive that improves high-temperature or low-temperature performance of the battery.

### [Separator]

In some implementations, the secondary battery further includes a separator. The type of the separator is not particularly limited in the present disclosure, and any well-known separator with a porous structure having good chemical stability and mechanical stability can be selected.

In some implementations, a material of the separator may be selected from at least one of glass fiber, non-woven fabric, polyethylene, polypropylene, and polyvinylidene fluoride. The separator can be either a single-layer thin film or a multi-layer composite thin film without special limitations. When the separator is a multi-layer composite thin film, the materials of the layers can be the same or different without special limitations.

In some implementations, an electrode assembly may be manufactured by a positive electrode plate, a negative electrode plate, and a separator by a winding process or a laminating process.

In some implementations, the secondary battery may include an outer package. The outer package can be used to encapsulate the above electrode assembly and electrolyte.

In some implementations, the outer package of the secondary battery may be a hard housing, for example, a hard plastic housing, an aluminum housing, or a steel housing. The outer package of the secondary battery may also be a soft package, for example, a pouch-type soft package. A material of the soft package may be plastic, and examples of the plastic may include polypropylene, polybutylene terephthalate, and polybutylene succinate.

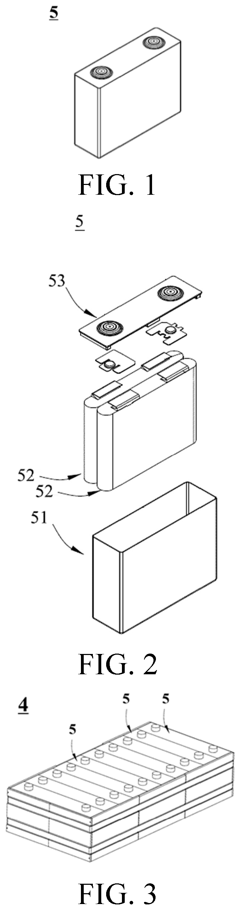

A shape of the secondary battery is not particularly limited in the present disclosure, and the secondary battery may be cylindrical, prismatic, or of any other shape. For example, FIG. 1 shows a secondary battery 5 of a cuboidal structure as an example.

In some implementations, referring to FIG. 2, an outer packaging may include a housing 51 and a cover plate 53. The housing 51 may include a bottom plate and a side plate connected to the bottom plate. The bottom plate and the side plate enclose an accommodating cavity. The housing 51 has an opening in communication with the accommodating cavity, and the cover plate 53 can cover the opening to close the accommodating cavity. The positive electrode plate, the negative electrode plate, and the separator may be made into an electrode assembly 52 by a winding process or a laminating process. The electrode assembly 52 is packaged in the accommodating cavity. The electrolyte solution infiltrates into the electrode assembly 52. A quantity of electrode assemblies 52 included in the secondary battery 5 may be one or more, and may be selected by those skilled in the art based on specific actual requirements.

In some implementations, the secondary battery may be assembled into a battery module. The quantity of the secondary batteries included in the battery module may be one or more. The specific quantity may be selected by those skilled in the art according to the application and capacity of the battery module.

FIG. 3 shows a battery module 4 as an example. Referring to FIG. 3, in the battery module 4, a plurality of secondary batteries 5 may be sequentially arranged along a length direction of the battery module 4. Certainly, the secondary batteries may alternatively be arranged in any other manner. The plurality of secondary batteries 5 may further be fixed through a fastener.

Optionally, the battery module 4 may further include a shell with an accommodating space. The plurality of secondary batteries 5 may be accumulated in the accommodating space.

In some implementations, the battery module may further be assembled into a battery pack, the quantity of battery module included in the battery pack may be one or more, and the specific quantity may be selected by those skilled in the art according to the application and capacity of the battery pack.

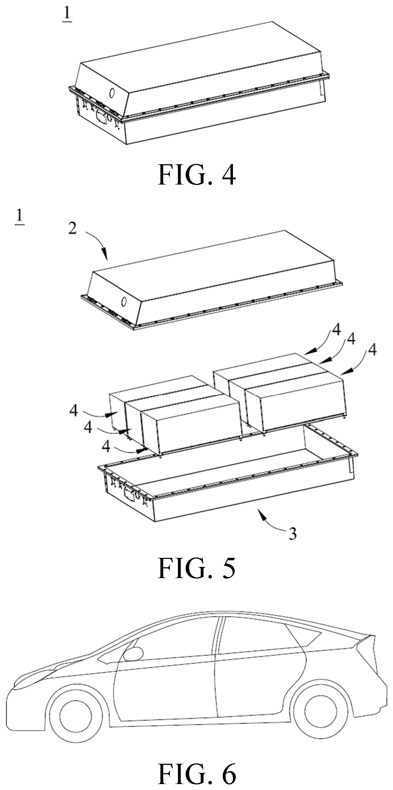

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box 2 and a lower box 3. The upper box 2 can cover the lower box 3 to form a closed space for accommodating the battery modules 4. The plurality of battery modules 4 may be arranged in the battery box in any way.

In addition, the present disclosure further provides a power consuming apparatus, where the power consuming apparatus includes at least one of the secondary battery, the battery module, or the battery pack provided in the present disclosure. The secondary battery, battery module, or battery pack can be used as a power source for the power consuming apparatus, and can also be used as an energy storage unit for the power consuming apparatus. The power consuming apparatus may include a mobile device (for example, a mobile phone or a notebook computer), an electric vehicle (for example, a pure electric vehicle, a hybrid electric vehicle, a plug-in hybrid electric vehicle, an electric bicycle, an electric scooter, an electric golf cart, or an electric truck), an electric train, a ship, a satellite, an energy storage system, or the like, but is not limited thereto.

For the power consuming apparatus, the secondary battery, the battery module, or the battery pack can be selected according to the requirements during use.

FIG. 6 show a power consuming apparatus as an example. The power consuming apparatus is an all-electric vehicle, a hybrid electric vehicle, a plug-in hybrid electric vehicle, or the like. To satisfy the need of the power consuming apparatus for a high power and high energy density of secondary batteries, a battery pack or a battery module can be used.

The apparatus as another example may be a mobile phone, a tablet computer, a laptop, and the like. The apparatus is generally required to be light and thin, and may use a secondary battery as a power source.

### Examples

Examples of the present disclosure are described below. The examples described below are illustrative, are merely used to explain the present disclosure, and should not be construed as a limitation to the present disclosure. Where no specific technologies or conditions are indicated in the embodiments, the technologies or conditions described in the literatures in the art or the instructions for the product are followed. The reagents or instruments without manufacturer indicated are all conventional products that may be purchased in the market.

### I. Preparation method

### Example 1

### 1. Preparation of a graphite negative electrode active material

A petroleum coke raw material whose mosaic and regional structures have a volume proportion of 65% was coarsely crushed, then the coarsely crushed material was crushed and sieved, and the sieved material was shaped, classified, and subject to fine powder removal, to obtain a secondary raw material having a Dv50 particle size of 12.0 µm and a particle size distribution (Dv90-Dv10)/Dv50 of 1.61.

The secondary raw material was put into a furnace to perform pre-carbonization at a pre-carbonization temperature of 1000 °C for a high-temperature zone time of 24h, to obtain a precursor, whose tap density is 0.99 g/cm³.

Graphitization treatment was performed on the precursor by using a lengthwise graphitization furnace, where a temperature of the graphitization treatment is 2850 °C, a maximum power used for the graphitization treatment is 25000 W (which refers to an actual use power of the lengthwise graphitization furnace, and occupies approximately 85% of a rated power of the lengthwise graphitization furnace), and after continuous treatment was performed by keeping the power unchanged for 9.5 h, a temperature of a surface of a graphite crucible of the lengthwise graphitization furnace was reduced to 300 °C, to obtain a graphitized product.

The intermediate product was obtained after the graphitized product was subject to fusion treatment in a high-speed fusion machine, where a fusion treatment frequency is 40 Hz, and a fusion treatment time is 10 min. The intermediate product was mixed with pitch, where a mass ratio of the intermediate product to the pitch is 98%:2%. Carbonization treatment was performed at 1150 °C after the mixing, where a carbonization treatment time is 2 h. After processes of demagnetizing and mixed-batching a finished product, a graphite negative electrode active material was obtained, where a powder compaction density of the graphite negative electrode active material under a pressure of 49000 N is 1.70 g/cm³, a ratio Id/Ig of a peak intensity Id at 1250 cm⁻¹ to 1500 cm⁻¹ and a peak intensity Ig at 1500 cm⁻¹ to 1650 cm⁻¹ in a Raman spectrum of the graphite negative electrode active material is 0.27, and a graphitization degree is 89.1%.

### 2. Preparation of a secondary battery

The prepared negative electrode active material, a conductive agent: carbon black Super P, a thickener: sodium carboxymethyl cellulose, and a binder: styrene-butadiene rubber were mixed at a mass ratio of 96:1:1.2:1.8, and then a solvent deionized water was added and stirred with a vacuum mixer until the system was uniform, to obtain a negative electrode slurry. The negative electrode slurry was uniformly applied to a copper foil, which acted as a negative electrode current collector, to form a negative electrode film layer, followed by drying, cold pressing, and slitting to obtain a negative electrode plate. The areal density of the negative electrode film layer is 0.99 mg/cm², the cold-pressing roll gap of the cold-pressing treatment is -199, and the cold-pressing pressure is 50T.

### 2) Preparation of a positive electrode plate

A positive electrode active material: lithium iron phosphate (LFP), a conductive agent: Super P, and a binder: polyvinylidene fluoride were mixed in a mass ratio of 97:1:2, and a solvent of N-methylpyrrolidone was added and stirred with a vacuum mixer until the system was uniform, to obtain a positive electrode slurry. The positive electrode slurry was uniformly applied to an aluminum foil, which acted as a positive electrode current collector, followed by drying, cold pressing, and slitting to obtain a positive electrode plate. The compaction density of the positive electrode film layer was 2.50 g/cm³. The areal density of the positive electrode film layer is 19.7 mg/cm².

### 3) Preparation of an electrolyte solution

In an argon atmosphere glove box with a water content < 10 ppm, diethyl carbonate (DEC), ethyl methyl carbonate (EMC), and ethylene carbonate (EC) were mixed at a weight ratio of 1:1:1 to obtain an organic solvent, and then LiPF₆ was dissolved in the organic solvent to prepare an electrolyte solution with a concentration of 1.0mol/L. Then, vinylene carbonate (VC) was added, where a content of VC is 2% of a total mass of the electrolyte solution.

### 5) Separator

A polypropylene film was used as the separator.

### 6) Preparation of a secondary battery

The positive electrode plate, the separator, and the negative electrode plate were laminated in sequence, so that the separator was located between the positive electrode plate and the negative electrode plate to separate the positive electrode plate from the negative electrode plate, and were wound to obtain an electrode assembly; the electrode assembly was placed in an outer package, and dried, then an electrolyte solution was injected, followed by processes such as vacuum packaging, standing, formation, and shaping, to obtain the lithium-ion battery.

Preparation methods in Examples 2 to 5 are substantially the same as that in Example 1, and a difference lies in that, the gram capacity of the graphitized product is adjusted by adjusting the volume proportion of the mosaic structure and the regional structure in the raw material, the maximum power of the graphitization treatment, or the constant power time of the graphitization treatment at the maximum power, which is specifically shown in Table 1.

A preparation method in Example 6 was substantially the same as that in Example 1, and a difference lies in that, the gram capacity of the graphitized product is adjusted by adjusting the volume proportion of the mosaic structure and the regional structure in the raw material, the maximum power of the graphitization treatment, or the constant power time of the graphitization treatment at the maximum power, and the fusion frequency and the fusion time of the fusion treatment are adjusted, which is specifically shown in Table 1.

**Table 1**

| | Process parameter | | | | | |
|---|---|---|---|---|---|---|
| Serial number | Raw material | Graphitization treatment | | | Surface treatment | |
| | Volume proportion of mosaic and area structures | Maximum power (W) of graphitization treatment | Constant power time (h) of the graphitization treatment at the maximum power | Gram capacity (mAh/g) of the graphitized product | Fusion frequency (Hz) | Fusion time (min) |
| Example 1 | 65% | 25000 | 9.5 | 332 | 40 | 10 |
| Example 2 | 68% | 21500 | 12.0 | 330 | 40 | 10 |
| Example 3 | 66% | 22000 | 13.5 | 334 | 40 | 10 |
| Example 4 | 67% | 23000 | 14.0 | 338 | 40 | 10 |
| Example 5 | 69% | 21500 | 9.0 | 325 | 40 | 10 |
| Example 6 | 70% | 22000 | 14.0 | 335 | 30 | 12 |
| Comparative Example 1 | 65% | 25000 | 9.5 | 332 | / | / |
| Comparative Example 2 | 68% | 21500 | 12.0 | 330 | / | / |

A preparation method in Comparative Example 1 was substantially the same as that in Example 1, and a difference lies in that, fusion treatment and pitch coating treatment are not performed in a preparation process of the graphite negative electrode active material.

A preparation method in Comparative Example 2 was substantially the same as that in Example 2, and a difference lies in that, fusion treatment is not performed in a preparation process of the graphite negative electrode active material, and coating is directly performed.

### II. Performance test

### Cycle performance test of the secondary battery

At 60°C, each of the batteries in the foregoing examples and comparative examples was charged to a voltage of 3.65 V at a constant current of 1 C and then charged at a constant voltage of 3.65 V until the current is less than or equal to 0.05 C, and then the battery was discharged to a voltage of 2.5 V at a constant current of 1 C. This was a charge and discharge process. A discharge capacity C1 at an initial cycle was recorded. Charge and discharge cycles were repeated in such a manner, until the capacity of the battery faded to 80% of the initial capacity C1. The test was stopped, and the number of cycles of the test was recorded.

### 2. Charge time of secondary battery

At 25°C, the secondary battery was charged to 3.65 V at a constant current of 0.33 C, and then charged at a constant voltage until the current was 0.05 C. After standing for 5 min, the secondary battery was discharged to 2.50 V at a constant current of 0.33 C. An actual capacity of the secondary battery was recorded as C0.

Then, the secondary battery was sequentially charged at constant currents of 1.0 C0, 1.3 C0, 1.5 C0, 1.8 C0, 2.0 C0, 2.3 C0, 2.5 C0, and 3.0 C0, to a negative cut-off potential of 3.5 V or 0 V (subject to whichever is reached first). After each charge was completed, the secondary battery needed to be discharged to 2.5 V at 1 C0. Negative potentials corresponding to cases that the secondary battery was charged to 10%, 20%, 30%, ..., and 80% State of Charge (SOC) at different charge rates were recorded. Charge rate-negative potential curves in different SOC states were drawn. Charge rates corresponding to cases that the negative potential is 0 V in the different SOC states were obtained after linear fitting. The charge rates are charge windows in the SOC states, and are respectively denoted as C10%SOC, C20%SOC, C30%SOC, C40%SOC, C50%SOC, C60%SOC, C70%SOC, and C80%SOC. According to a formula (60/C10%SOC+60/C20%SOC+60/C30%SOC+60/C40%SOC+60/C50%SOC+60/C60%SOC +60/C70%SOC+60/C80%SOC)×10%, a charge time T (on the premise that lithium plating does not occur in the secondary battery) in which the secondary battery is charged from 10%SOC to 80%SOC is calculated, and the unit is min. A shorter charge time indicates better fast charge performance of the secondary battery.

### 3. Compaction density of the negative electrode film layer

The compaction density of the negative electrode film layer can be tested using methods known in the art. As an example, an electronic balance is used to weigh a test sample of a negative electrode plate whose area is S, the weight is recorded as W1, and a thickness T1 of the negative electrode plate is measured by using a micrometer. Then, the film layer of the weighed electrode plate is wiped off, the weight of the negative current collector is measured and recorded as W2, and the thickness T2 of the negative current collector is measured by using a micrometer. Therefore, the compaction density PD of the negative electrode film layer = (W1-W2)/[(T1-T2) × S].

### III. Results

It can be learned from Table 2 that, a powder compaction density of the graphite negative electrode active material provided in the embodiments of the present disclosure is greater than or equal to 1.60 g/cm³, and a ratio Id/Ig of a peak intensity Id at 1250 cm⁻¹ to 1500 cm⁻¹ and a peak intensity Ig at 1500 cm⁻¹ to 1650 cm⁻¹ in a Raman spectrum of the graphite negative electrode active material is greater than or equal to 0.15. It can be learned from comparisons between Examples 1 to 6 and Comparative Examples 1 and 2 that, according to the graphite negative electrode active material of the present disclosure, a high powder compaction density and high Id/Ig are both considered. On the premise that the negative electrode film layer has a high compaction density, a charge time of charging the battery from 10%SOC to 80%SOC can be shortened, so that on the premise that the secondary battery has a relatively high energy density, the rate performance of the battery can be effectively improved, the number of cycles of the battery can be increased, and the cycle performance of the battery can be improved.

It can be learned from Table 2 that, the graphitization degree of the graphite negative electrode active material ranges from 85% to 91%; the negative electrode film layer has a high compaction density; the battery has a short charge time of charging from 10%SOC to 80%SOC and a large number of cycles; and the secondary battery has a high energy density and excellent cycle performance and rate performance.

**Table 2**

| | Graphite negative electrode active material | | | Secondary battery | | |
|---|---|---|---|---|---|---|
| Serial number | Powder compaction density (g/cm³) | Id/Ig | Graphitization degree | Compaction density (g/cm³) of the negative electrode film layer | Number of cycles | Charge time (min) |
| Example 1 | 1.70 | 0.27 | 89.1% | 1.41 | 2499 | 20.68 |
| Example 2 | 1.69 | 0.29 | 87.3% | 1.40 | 2508 | 21.39 |
| Example 3 | 1.71 | 0.25 | 89.9% | 1.43 | 2491 | 21.17 |
| Example 4 | 1.75 | 0.20 | 90.5% | 1.45 | 2531 | 21.05 |
| Example 5 | 1.65 | 0.31 | 85.0% | 1.35 | 2563 | 19.58 |
| Example 6 | 1.73 | 0.22 | 90.1% | 1.43 | 2512 | 20.85 |
| Comparative Example 1 | 1.72 | 0.10 | 89.1% | 1.40 | 2483 | 28.14 |
| Comparative Example 2 | 1.59 | 0.26 | 87.4% | 1.32 | 2485 | 20.95 |

It needs to be noted that the present disclosure is not limited to the above embodiments. The above embodiments are only illustrative, and the embodiments within the scope of the technical solution of the present disclosure that have substantively the same composition and the same role and effect as the technical idea are all included in the technical scope of the present disclosure. In addition, within the scope of not departing from the gist of the present disclosure, various variations made to the embodiments that are conceivable to those skilled in the art and other modes constructed by combining some constituent elements of the embodiment are also included in the scope of the present disclosure.

## Claims

1. A graphite negative electrode active material, wherein a powder compaction density of the graphite negative electrode active material under a pressure of 49000 N is greater than or equal to 1.60 g/cm³, and a ratio Id/Ig of a peak intensity Id at 1250 cm⁻¹ to 1500 cm⁻¹ and a peak intensity Ig at 1500 cm⁻¹ to 1650 cm⁻¹ in a Raman spectrum of the graphite negative electrode active material is greater than or equal to 0.15.

2. The graphite negative electrode active material according to claim 1, wherein the powder compaction density of the graphite negative electrode active material under the pressure of 49000 N ranges from 1.60 g/cm³ to 1.80 g/cm³, and optionally ranges from 1.65 g/cm³ to 1.75 g/cm³.

3. The graphite negative electrode active material according to claim 1 or 2, wherein the ratio Id/Ig of the peak intensity Id at 1250 cm⁻¹ to 1500 cm⁻¹ and the peak intensity Ig at 1500 cm⁻¹ to 1650 cm⁻¹ in the Raman spectrum of the graphite negative electrode active material ranges from 0.2 to 0.35.

4. The graphite negative electrode active material according to any one of claims 1 to 3, wherein based on a total quantity of particles of the graphite negative electrode active material, a quantity proportion of primary particles in the graphite negative electrode active material is greater than or equal to 85%, and optionally ranges from 85% to 100%.

5. The graphite negative electrode active material according to any one of claims 1 to 4, wherein a graphitization degree of the graphite negative electrode active material ranges from 85% to 91%.

6. The graphite negative electrode active material according to any one of claims 1 to 5, wherein a volume distribution particle size Dv50 of the graphite negative electrode active material is less than or equal to 15.0 µm, and optionally ranges from 9.0 µm to 14.0 µm.

7. The graphite negative electrode active material according to any one of claims 1 to 6, wherein the graphite negative electrode active material comprises a kernel and a coating layer covering at least a surface of the kernel, the kernel is artificial graphite, and the coating layer comprises amorphous carbon.

8. The graphite negative electrode active material according to any one of claims 1 to 7, wherein the graphite negative electrode active material satisfies at least one of the following conditions:
(1) a tap density of the graphite negative electrode active material ranges from 1.0 g/cm³ to 1.4 g/cm³;
(2) a specific surface area of the graphite negative electrode active material ranges from 0.75 m²/g to 1.75 m²/g;
(3) a particle size distribution (Dv90-Dv10)/Dv50 of the graphite negative electrode active material ranges from 1.30 to 1.80; and
(4) a gram capacity of the graphite negative electrode active material ranges from 325 mAh/g to 340 mAh/g.

9. A preparation method for a graphite negative electrode active material, comprising the following steps:
providing a raw material;
treating the raw material to obtain a precursor;
performing graphitization treatment on the precursor to obtain a graphitized product; and
performing surface treatment on the graphitized product to obtain a graphite negative electrode active material, wherein
a powder compaction density of the graphite negative electrode active material under a pressure of 49000 N is greater than or equal to 1.60 g/cm³; and
a ratio Id/Ig of a peak intensity Id at 1250 cm⁻¹ to 1500 cm⁻¹ and a peak intensity Ig at 1500 cm⁻¹ to 1650 cm⁻¹ in a Raman spectrum of the graphite negative electrode active material is greater than or equal to 0.15.

10. The preparation method according to claim 9, wherein the surface treatment specifically comprises the following steps:
performing fusion treatment on the graphitized product to obtain an intermediate product, wherein a frequency of the fusion treatment ranges from 20 to 40 Hz, and/or a time of the fusion treatment ranges from 5 to 15 min; and
performing carbonization treatment on the intermediate product and pitch after being mixed at a normal temperature to obtain the graphite negative electrode active material.

11. The preparation method according to claim 10, wherein a mass ratio of the intermediate product to the pitch ranges from 1:99 to 10:90, and optionally ranges from 2:98 to 5:95.

12. The preparation method according to any one of claims 9 to 11, wherein the raw material is a raw material comprising one or more of petroleum coke, needle coke, and pitch coke, and optionally is petroleum coke.

13. The preparation method according to claim 12, wherein
based on a total volume of structures of the raw material, a volume proportion of a mosaic structure and a regional structure is greater than or equal to 60%, and optionally ranges from 65% to 80%.

14. The preparation method according to any one of claims 9 to 13, wherein a maximum power of the graphitization treatment is 70% to 90% of a rated power of a graphitization treatment device.

15. The preparation method according to any one of claims 9 to 14, wherein the maximum power of the graphitization treatment ranges from 21000 W to 26000 W; and/or, a constant power time of the graphitization treatment at the maximum power ranges from 8 h to 40 h.

16. The preparation method according to any one of claims 9 to 15, wherein a gram capacity of the graphitized product ranges from 325 mAh/g to 340 mAh/g.

17. The preparation method according to any one of claims 9 to 16, wherein the treating the raw material specifically comprises the following steps:
crushing, reshaping, and classifying the raw material, and removing fine powder obtained after the crushing, to obtain a secondary raw material; and
carbonizing the secondary raw material, to obtain a precursor,
wherein a volume distribution particle size Dv50 of the secondary raw material ranges from 8.0 to 16.0 µm, and/or a particle size distribution (Dv90-Dv10)/Dv50 of the secondary raw material ranges from 1.30 to 1.70.

18. A secondary battery, comprising a negative electrode plate, wherein the negative electrode plate comprises the graphite negative electrode active material according to any one of claims 1 to 8, or a graphite negative electrode active material prepared by using the preparation method according to any one of claims 9 to 17.

19. A power consuming apparatus, comprising the secondary battery according to claim 18.
